# EUROPÄISCHE PATENTANMELDUNG

(11) **EP 3 585 084 A1**
(43) Veröffentlichungstag der Anmeldung: **25.12.2019**
(21) Anmeldenummer: 18178316.8
(22) Anmeldetag: 18.06.2018
(51) Int. Cl.: H04W 12/08, H04W 48/18

(54) **EINRICHTUNG EINER ZUGANGSBERECHTIGUNG ZU EINEM TEILNETZWERK EINES MOBILFUNKNETZES**

(71) Anmelder: Siemens Aktiengesellschaft, 80333 München (DE)
(72) Erfinder: Falk, Rainer, 85586 Poing (DE); Fries, Steffen, 85598 Baldham (DE); Walewski, Joachim, 82008 Unterhaching (DE)

(57) **Zusammenfassung**

Verfahren zur Einrichtung einer Zugangsberechtigung für eine Teilnehmervorrichtung (100) zu einem Teilnetzwerk (107) eines Mobilfunknetzes (106), wobei das Teilnetzwerk (107) mittels einer Mobilfunk-Administrationsvorrichtung (102) von einem administriert wird und die Zugangsberechtigung der Teilnehmervorrichtung (100) zum Teilnetzwerk (107) mittels einer Zugangsvorrichtung (104) des Mobilfunknetzes überprüft wird, wobei
- eine Zugriffsberechtigung zum Teilnetzwerk (107) von einer lokalen Administrationsvorrichtung (101) bei der Mobilfunk-Administrationsvorrichtung (102) für die Teilnehmervorrichtung (100) angefordert wird (100),
- ein Teilnetzwerk-Autorisierungs-Token von der Mobilfunk-Administrationsvorrichtung (102) der Teilnehmervorrichtung (100) zugewiesen wird (2) und an die Teilnehmervorrichtung (100) übermittelt wird (3),
wobei die Teilnehmervorrichtung (100) lediglich dann zum Zugriff auf das Teilnetzwerk (107) autorisiert wird, wenn der Teilnetzwerk-Autorisierungs-Token bei einer Zugangsanfrage von der Teilnehmervorrichtung (100) zum Teilnetzwerk (107) übermittelt (4) und als gültig bestätigt wird (5).

## Beschreibung

Die Erfindung betrifft ein Verfahren, ein Assistenzsystem, eine Teilnehmervorrichtung sowie ein Computerprogrammprodukt zur Einrichtung einer Zugangsberechtigung für eine Teilnehmervorrichtung zu einem Teilnetzwerk eines Mobilfunknetzes, wobei das Teilnetzwerk mittels einer Mobilfunk-Administrationsvorrichtung von einem Teilnetzwerkbetreiber administriert wird und die Zugangsberechtigung der Teilnehmervorrichtung zum Teilnetzwerk mittels einer Zugangsvorrichtung des Mobilfunknetzes eines Mobilfunknetzbetreibers überprüft wird.

In einem künftigen Mobilfunknetz, insbesondere in einem Mobilfunknetz der fünften Generation (5G), das derzeit vom 3te Generation Partnerschaftsprojekt 3GPP standardisiert wird, werden unterschiedliche Arten von Netzwerkszenarien und Netzwerkbetreibern unterstützt. Neben Betreibern von öffentlichen Mobilfunknetzen sind auch lokale, private, isolierte Teilnetz-Betreiber vorgesehen, die ein reales, eigenständiges Mobilfunknetz oder ein Teilnetzwerk in einem übergeordneten Mobilfunknetz betreiben. In der Regel können lediglich Teilnehmer beziehungsweise Teilnehmervorrichtungen aus einer begrenzten Teilnehmergruppe einen Zugang zum Teilnetzwerk erlangen.

In Mobilfunknetzen werden üblicherweise zentrale Netzwerkkomponenten, im Weiteren auch als Berechtigungsserver bezeichnet, verwendet, um Teilnehmer zu authentisieren und um deren Netzwerkzugangsberechtigung zu verwalten. In Mobilfunknetzen gemäß einem 3GPP-Standard der dritten, vierten und auch der fünften Generation werden solche zentralen Netzwerkkomponenten beispielsweise Authentisierungsserver (AAA-Server), Home Subscriber Server (HSS) oder User Profile Server (UPS) bezeichnet. Netzwerkzugangsberechtigungen der Teilnehmer sowie Information zu nutzbaren Diensten des Teilnehmers sind in der Regel fest konfiguriert. Änderungen können zentral durch einen Administrator eines Mobilfunknetzbetreibers erfolgen.

Neben Teilnehmern können auch Teilnetzwerke innerhalb eines künftigen 5G Mobilfunknetzes eingerichtet und administriert werden. Solche Teilnetzwerke werden auch als "Netzwerkscheibe" oder "Network Slice" bezeichnet. Dabei kann eine Netzwerkscheibe erzeugt, geändert, aktiviert, deaktiviert oder auch gelöscht werden. Ein Teilnetzwerk wird beispielsweise durch eine Teilnetzwerk-Managementfunktion (NSMF) des Mobilfunknetzes konfiguriert. Ein Teilnetzwerkbetreiber greift zur Administration des Teilnetzwerkes jedoch nicht direkt auf die Teilnetzwerk-Managementfunktion zu, sondern er greift über eine vorgelagerte Kundenteilnetzwerk-Managementfunktion (CSMF), die im Weiteren als Mobilfunk-Administrationsvorrichtung bezeichnet wird, auf die Teilnetzwerk-Managementfunktion (NSMF) zu. Beispielhafte Funktionen und Kommunikationsmöglichkeiten werden beispielsweise in dem 3GPP-Bericht TR 28.801 beschrieben.

Wird ein solches Teilnetz in einem industriellen Umfeld verwendet, ist eine flexible Konfiguration von zugriffsberechtigten Teilnehmern notwendig. Beispielsweise zum Erbringen eines externen Dienstes, bei einer Inbetriebnahme einer Anlage oder einer Fehlersuche in der Anlage besteht der Bedarf, weiteren Teilnehmern temporär oder dauerhaft den Zugriff auf das Teilnetzwerk zu genehmigen.

Es ist die Aufgabe der vorliegenden Erfindung Profildaten eines Mobilfunkteilnehmers und insbesondere eine Zugangsberechtigung zum Teilnetzwerk flexibel einrichten, ändern und verwalten zu können.

Die Aufgabe wird durch die in den unabhängigen Ansprüchen beschriebenen Maßnahmen gelöst. In den Unteransprüchen sind vorteilhafte Weiterbildungen der Erfindung dargestellt.

Ein erster Aspekt der Erfindung betrifft ein Verfahren zur Einrichtung einer Zugriffsberechtigung für eine Teilnehmervorrichtung zu einem Teilnetzwerk eines Mobilfunknetzes, wobei das Teilnetzwerk mittels einer Mobilfunk-Administrationsvorrichtung von einem Teilnetzwerkbetreiber administriert wird und die Zugangsberechtigung der Teilnehmervorrichtung zum Teilnetzwerk mittels einer Zugangsvorrichtung des Mobilfunknetzes eines Mobilfunk-Betreibers überprüft wird, wobei eine Zugriffsberechtigung zum Teilnetzwerk von einer lokalen Administrationsvorrichtung des Teilnetzwerkbetreibers bei der Mobilfunk-Administrationsvorrichtung des Mobilfunk-Betreibers für die Teilnehmervorrichtung angefordert wird, ein Teilnetzwerk-Autorisierungs-Token von der Mobilfunk-Administrationsvorrichtung der Teilnehmervorrichtung zugewiesen wird und an die Teilnehmervorrichtung übermittelt wird, wobei die Teilnehmervorrichtung lediglich dann zum Zugriff auf das Teilnetzwerk autorisiert wird, wenn der Teilnetzwerk-Autorisierungs-Token bei einer Zugangsanfrage von der Teilnehmervorrichtung zum Teilnetzwerk übermittelt und als gültig bestätigt wird.

Somit kann bei einer im Mobilfunknetz üblichen Zugangsanfrage der Teilnehmervorrichtung anhand des vorher angeforderten und zugewiesenen Teilnehmer-Autorisierungs-Tokens die Zugangsberechtigung der Teilnehmervorrichtung zum Teilnetzwerk überprüft werden. Dies entspricht in weiten Teilen der bekannten und verwendeten Zugangs-Berechtigungsprüfung in einem Mobilfunknetz und berücksichtigt gleichzeitig die von einem Teilnetzwerkbetreiber administrierte Zugriffsberechtigung für eine Teilnehmervorrichtung.

Eine Teilnehmervorrichtung kann ein Mobilfunkgerät, ein Teilnehmer eines Mobilfunkgerätes oder auch ein Gerät, beispielsweise in einer Industrieanlage, sein, das über das Teilnetzwerk mit anderen Teilnehmervorrichtungen oder anderen Komponenten über das Teilnetzwerk verbunden ist und mit diesen kommuniziert. Die Mobilfunk-Administrationsvorrichtung kann beispielsweise einer Customer Slice Management Funktion (CSMF) eines 5G Mobilfunknetzes entsprechen. Eine lokale Administrationsvorrichtung steht dabei einem Teilnetzwerkbetreiber zur Administration des Teilnetzwerks zur Verfügung. Die lokale Administrationsvorrichtung kann dabei bevorzugt dem Teilnetzwerkbetreiber zugeordnet sein.

In einer vorteilhaften Ausführungsform wird die Teilnehmervorrichtung zum Zugriff auf das Teilnetzwerk nur dann autorisiert, wenn die Teilnehmervorrichtung zusätzlich von der Zugangsvorrichtung zum Zugriff auf das Mobilfunknetz autorisiert wird.

Dadurch können alle Teilnehmervorrichtungen, die zum öffentlichen Mobilfunknetz zugangsberechtigt sind, flexibel Zugang zu einem Teilnetzwerk des Mobilfunknetzwerks erhalten. Es ist nicht erforderlich, dass ein Mobilfunknetzbetreiber die Zugangsberechtigung für eine Teilnehmervorrichtung zu einem Teilnetzwerk vorab als zulässig konfiguriert hat. Dadurch werden flexible Nutzungsszenarien ermöglicht. Beispielsweise kann über die lokale Administrationsvorrichtung für ein Wartungsgerät mit Mobilfunk-Konnektivität ein Teilnetzwerk-Autorisierungs-Token von der Mobilfunk-Administrationsvorrichtung angefordert und zugewiesen werden. Ein Servicetechniker kann über dieses Wartungsgerät auf das Teilnetzwerk zugreifen und dort beispielsweise eine Diagnose oder Fehlersuche durchführen. Ein Teilnetzwerk-Autorisierungs-Token kann von einem Ersatzgerät verwendet werden, um unmittelbar Zugriff auf das Teilnetzwerk zu erhalten, ohne dass dem Ersatzgerät selbst ein eigener Teilnetzwerk-Autorisierungs-Token zugewiesen werden muss. Daher ist es insbesondere vorteilhaft, wenn die Autorisierung der Teilnehmervorrichtung zum Zugriff auf das Mobilfunknetz und die Autorisierung zum Zugriff auf das Teilnetzwerk unabhängig voneinander überprüft werden. Dazu ist es weiterhin vorteilhaft, den Teilnetzwerk-Autorisierungs-Token nicht direkt mit einer Zugangsberechtigung der Teilnehmervorrichtung zum Mobilfunknetz zu koppeln.

In einer vorteilhaften Ausführungsform wird beim Einrichten eines Teilnetzwerks ein Teilnetz-Zugangsserver eingerichtet und der Teilnetzwerk-Autorisierungs-Token wird im Teilnetz-Zugangsserver einem Teilnetzwerk, insbesondere einer Teilnetzwerks-Kennung des Teilnetzwerks, zugeordnet.

Dies hat den Vorteil, dass die Zugangsberechtigungen zu einem Teilnetzwerk zentral in einem Server gespeichert und administriert werden können. Dies erlaubt eine weitgehende Entkopplung der Teilnetzwerke und deren Administration durch beispielsweise unterschiedliche Teilnetzwerkbetreiber beziehungsweise vom Mobilfunknetzbetreiber. Somit ist eine unabhängige, flexible Administration des Teilnetzwerkes lokal durch den Teilnetzwerkbetreiber zusätzlich zu einer allgemeinen Nutzeradministration durch einen Mobilfunk-Betreiber möglich.

In einer vorteilhaften Ausführungsform wird der Zugang der Teilnehmervorrichtung auf das Teilnetzwerk lediglich dann autorisiert, wenn die Zuordnung des Teilnetzwerk-Autorisierungs-Token zum Teilnetzwerk bestätigt wird.

Insbesondere bei betriebskritischen Teilnetzwerken, wie beispielsweise Sicherheitsnetzwerken oder Netzwerken mit einer Echtzeitanforderung, kann dadurch mit hoher Verlässlichkeit verhindert werden, dass eine unberechtigte Teilnehmervorrichtung Zugriff auf das Teilnetzwerk erlangt.

In einer vorteilhaften Ausführungsform wird die Zuordnung durch eine Abfrage des Teilnetz-Zugangsservers ermittelt.

Dies hat den Vorteil, dass die Überprüfung der Zugangsberechtigung zum Teilnetzwerk ohne eine Anpassung der sonstigen Berechtigungsserver im Mobilfunknetz durchgeführt werden kann und somit keine Anpassung der üblichen Mobilfunk-Zugangsprozeduren und insbesondere eine Aktualisierung entsprechender Berechtigungsserver im Mobilfunknetz notwendig ist.

In einer vorteilhaften Ausführungsform wird eine Information zur Zuordnung des Teilnetzwerk-Autorisierungs-Token zum Teilnetzwerk vom Teilnetzwerk-Zugangsserver an einen Berechtigungsserver des Mobilfunknetzes übermittelt und die Zuordnung des Teilnetzwerk-Autorisierungs-Token zum Teilnetzwerk durch eine Abfrage des Berechtigungsservers ermittelt.

Dies hat den Vorteil, dass keine zusätzlichen Vorrichtungen wie hier der Teilnetz-Zugangsserver bei der Zugangsberechtigung der Teilnehmervorrichtung kontaktiert werden muss. Damit kann die Anzahl der zu kontaktierenden Vorrichtungen bei einer Zugangsprüfung und somit die Kommunikationswege optimiert werden.

In einer vorteilhaften Ausführungsform wird der Teilnetzwerk-Autorisierungs-Token über eine Daten-Kommunikationsverbindung oder über eine Nahfeld-Kommunikationsverbindung NFC oder durch Einscannen eines optischen Codes oder eine manuelle Eingabeeinheit von der Teilnehmervorrichtung empfangen.

Somit kann eine Teilnehmervorrichtung über eine Nahfeld-Kommunikationsverbindung mit einem Nahfeld-Label, oft auch RFID-Tag genannt, oder durch Einscannen eines QR-Codes, oder durch manuelle Eingabe über ein Eingabevorrichtung den Teilnetzwerk-Autorisierungs-Token empfangen. Dadurch ist keine direkte Kopplung zwischen Teilnehmervorrichtung und lokalen Administrationsvorrichtung, beispielsweise über eine Daten-Kommunikationsverbindung notwendig.

In einer vorteilhaften Ausführungsform enthält der Teilnetzwerk-Autorisierungs-Token mindestens einen Parameter, der erfüllt sein muss, um eine Zugangsberechtigung vom Teilnetzwerk zu erhalten.

Dies hat den Vorteil, dass über den mindestens einen Parameter weitere Kriterien für einen Netzwerkzugang der Teilnehmervorrichtung durch Überprüfung des Teilnetzwerk-Autorisierungs-Tokens geprüft und sichergestellt werden kann. Der Teilnetzwerk-Autorisierungs-Token kann beispielsweise codiert sein als Token in Java Script Objekt Notation (JSON-Token), als eine Datei in einer erweiterten Markup-Sprache, auch Extensible Markup Language XML genannt, als Attribut-Zertifikat entsprechend einem X.509-Standard der Internationalen Telekommunikationsvereinigung ITU, als nach Basisverschlüsselungsregeln (BER)-codierte ASN.1-Datenstruktur, Security Assertion Markup Language (SAML) Token oder als Textstring.

Über die Parameter des Teilnetzwerk-Autorisierungs-Tokens können dabei Zugangsberechtigungen beziehungsweise Restriktionen für das Teilnetzwerk eingerichtet werden. Solche Parameter sind beispielsweise:
die Teilnetzwerk-Kennung selbst oder eine Sub-Teilnetzwerk-Kennung, die den lokalen Zugangsbereich zum Teilnetzwerk weiter einschränkt;
ein zulässiger wiederkehrender Zeitraum für einen Zugriff auf das Teilnetzwerk, beispielsweise einen Zeitraum täglich zwischen 20.00 und 24.00 Uhr; oder
ein Gültigkeitszeitraum des Teilnetzwerk-Autorisierungs-Tokens an.
Des Weiteren kann durch die Parameter beispielsweise die Art der Mobilfunkteilnehmer-Kennung angegeben werden, mit der sich die Teilnehmervorrichtung am Teilnetzwerk anmelden kann. Durch einen solchen Parameter kann auch eine Kopplung zwischen dem Teilnetzwerk-Autorisierungs-Token und der Mobilfunkkennung des Teilnehmers eingerichtet werden, so dass lediglich eine bestimmte Teilnehmervorrichtung mit der angegebenen Mobilfunkkennung dem Teilnetzwerk-Autorisierungs-Token zur Zugangsberechtigung auf das Teilnetzwerk verwenden kann. Weitere Einschränkungen können z.B. auch die erlaubten Dienste oder zu nutzenden Kommunikationsprotokolle betreffen, die die Teilnehmervorrichtung über das Teilnetzwerk nutzen kann.

In einer vorteilhaften Ausführungsform wird der Teilnetzwerk-Autorisierungs-Token auf einem internen Speicher der Teilnehmervorrichtung abgespeichert.

Somit kann lediglich eine Teilnehmervorrichtung, der der Teilnetzwerk-Autorisierungs-Token zugewiesen wurde, diesen zum Zugang zum Teilnetzwerk verwenden und somit einen Zugang durch nicht zulässige Teilnehmervorrichtungen minimieren.

In einer vorteilhaften Ausführungsform wird der Teilnetzwerk-Autorisierungs-Token auf einem Sicherheitsmodul abgespeichert, wobei das Sicherheitsmodul lösbar mit der Teilnehmervorrichtung verbunden ist und in dem Sicherheitsfunktionen des Mobilfunknetzes abgespeichert sind. Das Sicherheitsmodul kann getrennt von einem Teilnehmer-Identifizierungsmodul des Mobilfunknetzes oder integriert mit dem eine Daten-Kommunikationsverbindung beispielsweise ausgebildet sein.

Dies hat den Vorteil, dass ein Servicetechniker beispielsweise unterschiedliche Teilnehmervorrichtungen verwenden kann, indem er sein Sicherheitsmodul mit unterschiedlichen Teilnehmervorrichtungen koppelt.

In einer vorteilhaften Ausführungsform ist das Teilnetzwerk ein Steuerungsnetzwerk einer Industrieanlage und wird insbesondere zur Übertragung von Steuerungskommunikation zu einem, bevorzugt gemeinsam verwendeten, Steuerungsserver außerhalb des Teilnetzwerks verwendet.

In einer vorteilhaften Ausführungsform ist das Mobilfunknetz gemäß einem Mobilfunkstandard der fünften Generation des dritten Generations-Partnerschaftsprojekts ausgebildet.

In einer vorteilhaften Ausführungsform werden das Mobilfunknetz und insbesondere die Mobilfunk-Administrationsvorrichtung, von einem Mobilfunknetzbetreiber administriert, und das Teilnetzwerk und insbesondere die lokale Administrationsvorrichtung von einem Teilnetzwerkbetreiber administriert wird, wobei der Mobilfunknetzbetreiber unterschiedlich zum Teilnetzwerkbetreiber ist.

Dies hat den Vorteil, dass das Teilnetzwerk von einem Teilnetzwerkbetreiber betrieben werden kann, der von einem Mobilfunknetzbetreiber unabhängig ist und vom Mobilfunknetzbetreiber Infrastruktur beziehungsweise lokale Zugangsberechtigung zu einem Teil des Netzes des Mobilfunknetzbetreibers erlangen kann.

Ein zweiter Aspekt der Erfindung betrifft ein Assistenzsystem zur Einrichtung einer Zugangsberechtigung für eine Teilnehmervorrichtung zu einem Teilnetzwerk eines Mobilfunknetzes, wobei das Teilnetzwerk mittels einer Mobilfunk-Administrationsvorrichtung von einem Teilnetzwerkbetreiber administriert wird und die Zugangsberechtigung der Teilnehmervorrichtung zum Teilnetzwerk mittels einer Zugangsvorrichtung des Mobilfunknetzes eines Mobilfunknetzbetreibers überprüft wird, umfassend eine lokale Administrationsvorrichtung, die derart ausgebildet ist, eine Zugriffsberechtigung zum Teilnetzwerk für die Teilnehmervorrichtung bei einer Mobilfunk-Administrationsvorrichtung des Mobilfunk-Betreibers anzufordern und die Mobilfunk-Administrationsvorrichtung derart ausgebildet ist, einem Teilnetzwerk-Autorisierungs-Token der Teilnehmervorrichtung zuzuweisen und an die Teilnehmervorrichtung zu übermitteln, wobei die Teilnehmervorrichtung lediglich dann zum Zugriff auf das Teilnetzwerk autorisiert wird, wenn der Teilnetzwerk-Autorisierungs-Token bei einer Zugangsanfrage von der Teilnehmervorrichtung zum Teilnetzwerk übermittelt und als gültig bestätigt wird.

In einer vorteilhaften Ausführungsform weist das Assistenzsystem des Weiteren einen Teilnetz-Zugangsserver auf, der beim Einrichten eines Teilnetzwerks eingerichtet wird und derart ausgebildet ist, den Teilnetzwerk-Autorisierungs-Token einem Teilnetzwerk, insbesondere einer Teilnetzwerk-Kennung des Teilnetzwerks zuzuordnen und das Verfahren gemäß den vorgenannten Merkmalen durchzuführen.

Ein dritter Aspekt der Erfindung betrifft eine Teilnehmervorrichtung, die derart ausgebildet ist, das Verfahren gemäß den beschriebenen Merkmalen durchzuführen.

Ein vierter Aspekt der Erfindung betrifft ein Computerprogrammprodukt, das direkt in einen Speicher mindestens eines digitalen Computers ladbar ist, umfassend Programmcodeteile, die dazu geeignet sind, die Schritte des beschriebenen Verfahrens durchzuführen.

Der Ausdruck "Computer" sollte möglichst breit ausgelegt werden, um insbesondere alle elektronischen Geräte mit Datenverarbeitungseigenschaften abzudecken. Computer können somit beispielsweise Personal Computers, Server, Handheld-Computersysteme, Pocket-PC-Geräte, Mobilfunkgeräte und andere Vorrichtungen des Mobilfunknetzes oder des Teilnetzwerkes, die rechnergestützte Daten verarbeiten können, Prozessoren und andere elektronische Geräte zur Datenverarbeitung sein.

Ausführungsbeispiele des erfindungsgemäßen Verfahrens, des Assistenzsystems und der Teilnehmervorrichtung sind in den Zeichnungen beispielhaft dargestellt und werden anhand der nachfolgenden Beschreibung näher erläutert. Es zeigen:
- Figur 1: ein Ausführungsbeispiel des erfindungsgemäßen Verfahrens als Ablaufdiagramm;
- Figur 2: ein Ausführungsbeispiel des erfindungsgemäßen Assistenzsystems in Blockdarstellung;
- Figur 3: ein Ausführungsbeispiel der erfindungsgemäßen Teilnehmervorrichtung in Blockdarstellung;
- Figur 4: ein zweites Ausführungsbeispiel des erfindungsgemäßen Verfahrens anhand eines Nachrichtenaustauschs in einem ersten Mobilfunknetzwerkszenario; und
- Figur 5: ein drittes Ausführungsbeispiel des erfindungsgemäßen Verfahrens anhand eines Nachrichtenaustausches in einem Mobilfunknetzszenario.

Einander entsprechende Teile sind in allen Figuren mit den gleichen Bezugszeichen versehen.

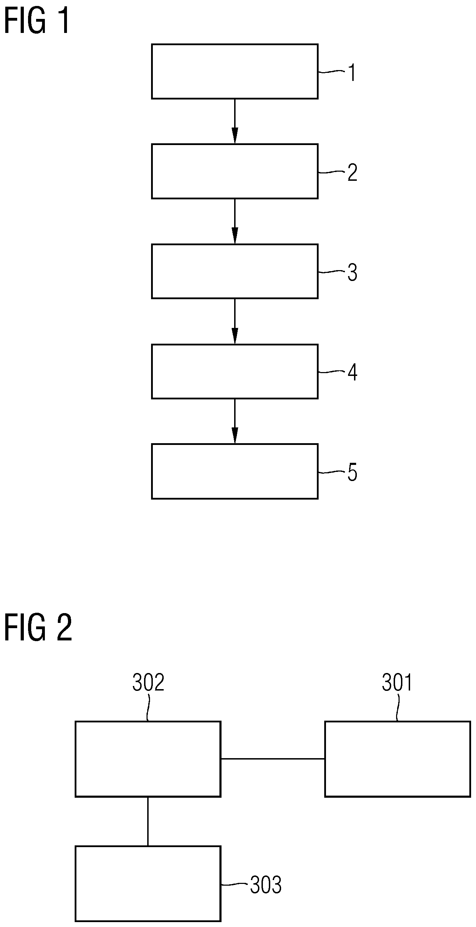

In Figur 1 ist ein Ausführungsbeispiel des erfindungsgemäßen Verfahrens in Form eines Ablaufdiagramms dargestellt. Das erfindungsgemäße Verfahren dient zur Einrichtung einer Zugangsberechtigung für eine Teilnehmervorrichtung zu einem Teilnetz eines Mobilfunknetzes. In einem Mobilfunknetz, wie beispielsweise von 3GPP als fünfte Generation Mobilfunknetz standardisiert, besteht die Möglichkeit zur Administration eines lokal begrenzten Teilbereichs des Mobilfunknetzes durch einen Kunden, der im Weiteren als Teilnetzwerkbetreiber bezeichnet wird. Als Administrationsschnittstelle zwischen dem Teilnetzwerkbetreiber und dem Mobilfunknetz ist eine Mobilfunk-Administrationsvorrichtung bereitgestellt, über die ein Teilnetzwerkbetreiber das Teilnetzwerk administrieren kann. Eine Zugangsberechtigung der Teilnehmervorrichtung zu einem Teilnetz wird mittels einer Zugangsvorrichtung des Mobilfunknetzes überprüft. Die Zugangsvorrichtung kommuniziert zur Überprüfung der Zugangsberechtigung weitere Komponenten des Mobilfunknetzes insbesondere Berechtigungsserver, die Information zu erlaubten Diensten und Zugangsberechtigungen der Teilnehmervorrichtung bereitstellen.

Um nun eine Zugangsberechtigung zu einem Teilnetzwerk für die Teilnehmervorrichtung einzurichten, wird in einem ersten Schritt 1 eine Zugriffsberechtigung zum Teilnetzwerk von einer lokalen Administrationsvorrichtung des Teilnetzwerkbetreibers bei der Mobilfunk-Administrationsvorrichtung des Mobilfunk-Betreibers für die Teilnehmervorrichtung angefordert.

In der Mobilfunk-Administrationsvorrichtung wird daraufhin ein Teilnetzwerk-Autorisierungs-Token der Teilnehmervorrichtung zugewiesen, siehe Verfahrensschritt 2 und an die Teilnehmervorrichtung übermittelt, siehe Verfahrensschritt 3. Bei einer Zugangsanfrage übermittelt die Teilnehmervorrichtung den erhaltenen Teilnetzwerk-Autorisierungs-Token zum Teilnetzwerk, siehe Verfahrensschritt 4. Mit anderen Worten, möchte eine Teilnehmervorrichtung eine Verbindung zum Teilnetzwerk aufbauen, übermittelt sie beispielsweise bei einer Zugangsanfrage zusätzlich zu den für das Mobilfunknetz üblichen Anfrageparametern den Teilnetzwerk-Autorisierungs-Token mit.

Die Teilnehmervorrichtung wird aber lediglich dann zum Zugriff auf das Teilnetzwerk autorisiert, wenn der Teilnetzwerk-Autorisierungs-Token im Verfahrensschritt 5 als gültig vom Mobilfunknetz beziehungsweise der Zugangsvorrichtung bestätigt wird. Bevorzugter Weise wird zusätzlich zum Teilnetzwerk-Autorisierungs-Token auch eine Mobilfunknetz-Zugangsberechtigung der Teilnehmervorrichtung überprüft, so dass lediglich die Teilnehmervorrichtungen, die zum Zugang zum Mobilfunknetz autorisiert sind, auch zum Teilnetzwerk Zugriff erlangen können.

Bei der Zuweisung des Teilnetzwerk-Autorisierungs-Tokens der Teilnehmervorrichtung wird dem Teilnetzwerk-Autorisierungs-Token einem Teilnetzwerk zugeordnet und insbesondere wird das Teilnetzwerk durch eine Teilnetzwerk-Kennung identifiziert, so dass eine Zuordnung zwischen dem Teilnetzwerk-Autorisierungs-Token und einer Teilnetzwerk-Kennung eingerichtet wird. Dies kann in der Mobilfunk-Administrationsvorrichtung ausgeführt werden. Bevorzugt wird jedoch beim Einrichten eines Teilnetzwerks ein Teilnetz-Zugangsserver eingerichtet, und die Zuordnung zwischen Teilnetzwerk-Autorisierungs-Token und Teilnetzwerk-Kennung wird abgespeichert und verwaltet.

Der Teilnetzwerk-Autorisierungs-Token enthält mindestens einen Parameter, der bei der Prüfung der Zugangsberechtigung überprüft wird und lediglich dann der Zugang autorisiert wird, wenn der Parameter beziehungsweise ein damit verbundenes Kriterium erfüllt ist. Der Teilnetzwerk-Autorisierungs-Token kann beispielsweise als ein JSON Token, als XML-Datei, als X.509-Attributzertifikat, als BER-codierte ASN.1-Datenstruktur, als SAML Token oder als Textstring codiert sein.

Figur 2 zeigt ein Assistenzsystem, bestehend aus einer lokalen Administrationsvorrichtung 301, einer Mobilfunk-Administrationsvorrichtung 302 sowie einem Teilnetz-Zugangsserver 303. Die lokale Administrationsvorrichtung 101 ist über eine drahtgebundene oder auch drahtlose Verbindung mit der Mobilfunk-Administrationsvorrichtung 102 verbunden. Der Teilnetz-Zugangsserver 303 ist mit der Mobilfunk-Administrationsvorrichtung 302 verbunden und speichert die von der Mobilfunk-Administrationsvorrichtung 302 zugewiesenen Teilnetzwerk-Autorisierungs-Token, insbesondere wird hier auch die Zuordnung der Teilnetzwerk-Kennung zum Teilnetzwerk-Autorisierungs-Token der Teilnehmervorrichtung verwaltet und beispielsweise bei Zugriffsberechtigungen durch Mobilfunknetz-Komponenten abgefragt. Der Teilnetz-Zugangsserver 303 kann auch als Teilfunktion in einer solchen Mobilfunk-Komponente, insbesondere einem Berechtigungsserver, integriert ausgebildet sein. Der Teilnetzwerk-Zugangsserver 303 wird bevorzugt beim Einrichten eines Teilnetzwerks eingerichtet. Die lokale Administrationsvorrichtung 301, die Mobilfunk-Administrationsvorrichtung 302 sowie der Teilnetz-Zugangsserver 303 umfassen mindestens einen digitalen Prozessor, der die genannten Funktionen ausführt.

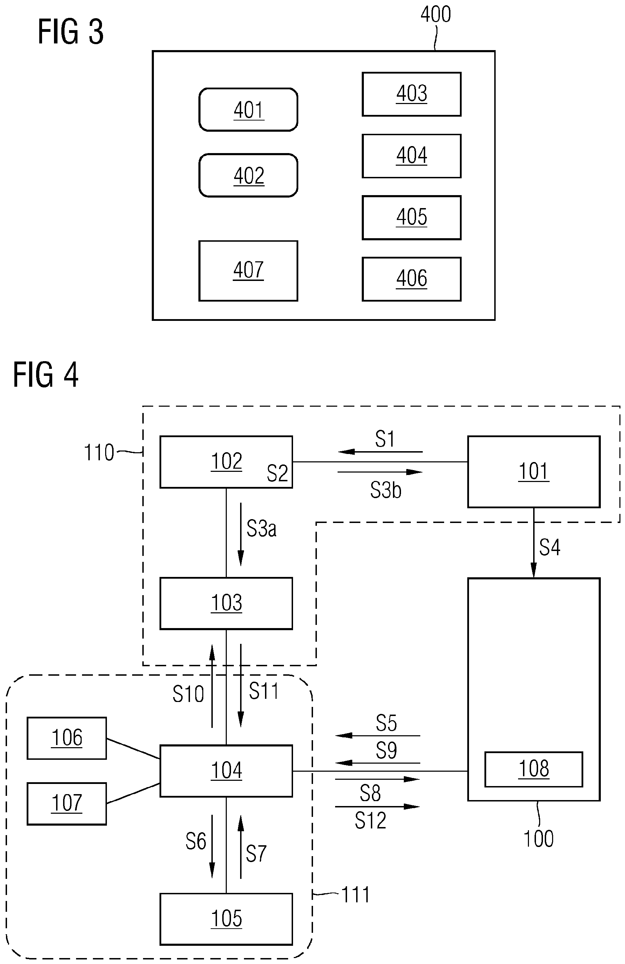

Figur 3 zeigt nun eine Teilnehmervorrichtung 400. Die Teilnehmervorrichtung 400 weist einen internen Speicher 401 auf, indem der zugewiesene Teilnetzwerk-Autorisierungs-Token abgespeichert wird. Alternativ kann der Teilnetzwerk-Autorisierungs-Token auf einem Sicherheitsmodul gespeichert werden, das lösbar mit der Teilnehmervorrichtung 400 verbunden ist. Das Sicherheitsmodul kann ähnlich einem Teilnehmer-Identifizierungsmodul 402, das ebenfalls in der Teilnehmervorrichtung 400 angeordnet ist, ausgebildet sein.

Das Teilnetzwerk-Autorisierungs-Token kann alternativ zusätzlich auf das Teilnehmer-Identifizierungsmodul 402 abgelegt werden. Das von der Mobilfunk-Administrationsvorrichtung angeforderte Teilnetzwerk-Autorisierungs-Token kann an die lokale Administrationsvorrichtung übermittelt werden und dort beispielsweise für weitere administrative Funktionen abgespeichert werden. Die Teilnehmervorrichtung 400 umfasst eine Daten-Kommunikationsschnittstelle 403, um den Teilnetzwerk-Autorisierungs-Token beispielsweise von der lokalen Administrationsvorrichtung 301 zu empfangen.

Die Teilnehmervorrichtung 400 weist alternativ oder zusätzlich eine Nahfeld-Kommunikationsschnittstelle 404 auf, um den Teilnetzwerk-Autorisierungs-Token, der beispielsweise in Form eines Funketiketts, auch als RFID-Transponder bezeichnet, eingelesen werden kann. Über eine optische Schnittstelle 405 kann beispielsweise eine als zweidimensionaler Strichcode, auch als QR-Code bezeichnet, codierter Teilnetzwerk-Autorisierungs-Token von der Teilnehmervorrichtung empfangen werden. Die Teilnehmervorrichtung umfasst des Weiteren eine manuelle Eingabeschnittstelle 406, beispielsweise ein Tastenfeld oder eine extern anschließbare Tastatur, einen berührungssensitiven Bildschirm, bei dem der Teilnetzwerk-Autorisierungs-Token manuell eingegeben werden. Die Teilnehmervorrichtung unterstützt somit eine Vielzahl von Eingabemöglichkeiten und unterstützt somit unterschiedliche Verteilungsstrategien für das Teilnehmer-Autorisierungs-Token.

Die Teilnehmervorrichtung 400 umfasst des Weiteren eine Steuereinheit 407, die Funktionen zur Überprüfung der Zugangsberechtigung, wie beispielsweise das Aussenden einer Zugangsanfrage, die das Teilnetzwerk-Autorisierungs-Token umfasst. Die genannten Module und Schnittstellen sowie die Steuerungseinheit 407 der Teilnehmervorrichtung 400 sind hardwaretechnisch oder auch softwaretechnisch auf mindestens einem Prozessor implementiert, wobei ein Prozessor, insbesondere ein Hauptprozessor, ein Mikroprozessor oder ein Mikrocontroller, möglicherweise in Kombination mit einer Speichereinheit zum Speichern von Programmbefehlen handeln.

Figur 4 zeigt nun eine beispielhafte Realisierung des Verfahrens in einem Mobilfunknetz 111. Beispielhaft ist eine Zugangsvorrichtung 104 des Mobilfunknetzes 111 eingezeichnet. Dies können beispielsweise eine Mobilfunknetzantenne sowie weitere Steuerungsvorrichtungen des Mobilfunk-Zugangsnetzes oder des Mobilfunknetz-Kernnetzes sein. Eine solche Zugangsvorrichtung 104 kann beispielsweise ausschließlich Zugang zu einem durch einen Teilnetzwerkbetreiber administriertes Teilnetzwerk 107 erlangt werden. Eine Zugangsvorrichtung 104 kann aber auch als Zugangsvorrichtung für einen öffentlich zugänglichen Teil des Mobilfunknetzes 106 bereitstellen. Das dargestellte Teilnetzwerk 107 beziehungsweise das dargestellte öffentliche Mobilfunknetz 106 können somit über die Zugangsvorrichtung 104 erreicht werden.

Ein Teilnetzwerk 107 kann beispielsweise als Steuerungsnetzwerk einer Industrieanlage oder für ein räumlich abgegrenztes Terrain wie beispielsweise ein Hafengelände, eine Werkshalle, verwendet werden, um nichtöffentliche Datenkommunikation in diesem Teilnetzwerk bereitzustellen. Insbesondere kann die Steuerungs-Kommunikation im Teilnetzwerk 107 mit einem außerhalb des Teilnetzwerks angeordneten Steuerungsserver ausgetauscht werden. Insbesondere können die Kommunikationsverbindung zwischen einer Teilnehmervorrichtung 100, die über das Teilnetzwerk 107 angebunden ist, mit einem geteilt verwendeten Steuerungsserver, auch als Cloud-Server bezeichnet, verwendet werden. Ein solcher Steuerungsserver wird von mehreren Nutzern gemeinsam verwendet. Das Mobilfunknetz 111 ist beispielsweise gemäß einem Mobilfunkstandard der fünften Generation ausgebildet. Typischerweise wird das Teilnetzwerk durch einen Teilnetzwerk-Provider administriert und wohingegen ein Mobilfunknetzbetreiber die Infrastruktur zum Betrieb des Mobilfunknetzes bereitstellt, sowie Administrationsfunktionen und Berechtigungsserver 105 zur Überprüfung von Zugangsberechtigungen und sonstigen beispielsweisen Nutzungsberechtigungen für Dienste, verwaltet und überprüft.

Mit dem Mobilfunknetz verbunden ist ein Assistenzsystem 110 dargestellt, das eine lokale Administrationsvorrichtung 101, eine Mobilfunk-Administrationsvorrichtung 102 und ein Teilnetz-Zugangsserver 103 aufweist. Die lokale Administrationsvorrichtung 101 dient zur Administration des Teilnetzwerks durch den Teilnetzwerkbetreiber. Die Mobilfunk-Administrationsvorrichtung 102 wird bevorzugt von Mobilfunk-Betreibern bereitgestellt als Zugangsvorrichtung zur Administration des Teilnetzwerks als Teil des Mobilfunknetzwerks.

Um einer Teilnehmervorrichtung 100 einen Zugriff auf ein Teilnetzwerk 107 zu ermöglichen, fordert die lokale Administrationsvorrichtung 101 eine Teilnetzwerk-Authentisierungs-Token für ein bestimmtes Teilnetzwerk an. Eine entsprechende Nachricht wird in Schritt S1 an die Mobilfunk-Administrationsvorrichtung 102 gesendet und umfasst eine Teilnetzwerk-Kennung des gewünschten Teilnetzwerks. Die Mobilfunk-Administrationsvorrichtung 102 erzeugt einen Teilnetzwerk-Autorisierungs-Token, siehe S2, und erstellt eine Zuordnung zwischen dem Teilnehmer und dem Teilnetzwerk-Authentisierungs-Token sowie der Teilnetzwerk-Kennung. Eine solche Zuordnung wird dem Teilnetz-Zugangsserver mitgeteilt, siehe S3a. Parallel dazu übermittelt die Mobilfunk-Administrationsvorrichtung 102 den Teilnetzwerk-Autorisierungs-Token im Schritt S3b an die Teilnehmervorrichtung 100 über die lokale Administrationsvorrichtung 101 siehe S3b beziehungsweise S4.

In der Teilnehmervorrichtung 100 wird der Teilnetzwerk-Autorisierungs-Token beispielsweise auf einem Mobilfunk-Identifizierungsmodul 108, auf dem auch die Mobilfunk-Identifizierungskennungen zum Zugang zum Mobilfunknetz gespeichert sind, abgelegt.

Die Teilnehmervorrichtung 100 kann sich nun an der Zugangsvorrichtung 104 des Mobilfunknetzes anmelden. Dazu übermittelt sie im Schritt S5 ihre Mobilfunkkennung, beispielsweise eine Netzzugangskennung, eine Pseudonym-Netzzugangskennung, in die beispielsweise eine Mobilfunkkennung oder eine Kennung der Mobilfunkvorrichtung als solche oder eine MAC-Adresse der Mobilfunkvorrichtung eincodiert sind. Als Authentisierungs- und Schlüsselvereinbarungsprotokoll kann beispielsweise ein erweiterbares Authentisierungsprotokoll vom Typ AKA (EAP-AKA) oder auch EAP-TLS oder EAP-TTLS benutzt werden. Die Teilnehmervorrichtung wird nun von einem Berechtigungsserver 105, beispielsweise einem Teilnehmerprofilserver, einem Authentisierungsserver oder einem Heimat-Subscriptionsserver authentisiert, siehe S6 und dem Teilnetzzugangsserver werden Profildaten der Teilnehmervorrichtung 100, S7, bereitgestellt.

Eine Bestätigung der Autorisierung zum Zugang zu einem öffentlichen Mobilfunknetz erhält die Teilnehmervorrichtung S8. Um diesen Zugang zum Teilnetzwerk 107 zu erlangen, findet die Teilnehmervorrichtung 100 nun beispielsweise in einer separaten Nachricht S9 den Teilnetzwerk-Autorisierungs-Token beispielsweise zusammen mit der Teilnetzwerk-Kennung, auf die zugegriffen werden soll sowie eine Mobilfunk-Kennung des Teilnehmers an die Zugangsvorrichtung 104, siehe S9.

Die Zugangsvorrichtung 104 übermittelt daraufhin eine Abfrage an den Teilnetz-Zugangsserver 103, S10. Dieser überprüft, ob eine entsprechende Zuordnung des Teilnetzwerk-Autorisierungs-Tokens zur Teilnetzwerk-Kennung und der Mobilfunkteilnehmer-kennung vorliegt und bestätigt dies der Teilnehmervorrichtung über die Zugangsvorrichtung 104, siehe S11, S12. Da im beschriebenen Szenario der Berechtigungsserver 105 keine Information über weitere Zugangsberechtigungen, insbesondere zum Teilnetzwerk, umfasst, wird im Schritt S10 und S11 der Teilnetzzugangsserver 103 kontaktiert und eine Zugriffsberechtigung zum Teilnetz überprüft, indem eine Zuordnung zwischen dem Teilnetzwerk-Autorisierungs-Token und der Teilnetzwerk-Kennung und eventuell weiter der Mobilfunknetz-Kennung bestätigt wird.

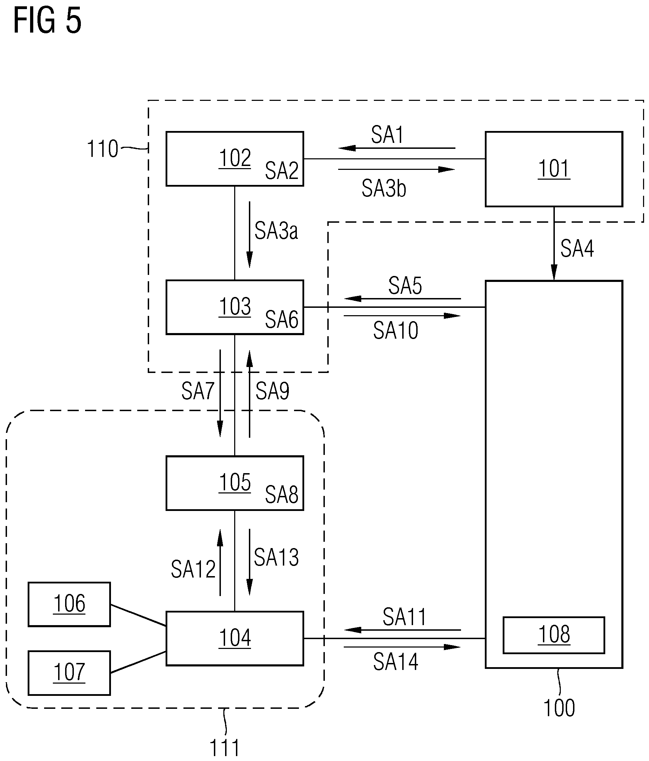

Figur 5 zeigt ein Ausführungsbeispiel, bei dem Zugangsberechtigung zum Teilnetzwerk vom Teilnetzwerk-Zugangsserver 103 an den Berechtigungsserver 105 vor einer Überprüfung der Zugangsberechtigung zum Mobilfunknetz durchgeführt wird.

Nach dem Anfordern und Zuweisen eines Teilnetzwerk-Autorisierungs-Tokens entsprechend dem in Figur 4 beschriebenen Ablauf, hier SA1 bis SA4, übermittelt die Teilnehmervorrichtung 100 eine Zugangsanfrage SA5 an den Teilnetzserver 103 und teilt diesem darin den zugewiesenen Teilnetz-Autorisierungs-Token, die Teilnetzwerk-Kennung des Teilnetzwerks auf das der Zugriff angefordert wird, sowie eine Mobilfunkkennung der Teilnehmervorrichtung mit.Der Teilnetz-Zugangsserver überprüft nun, ob eine Zuordnung des Teilnetzwerk-Autorisierungs-Tokens zur Teilnetzwerk-Kennung vorhanden ist, siehe SA6. Ist dies der Fall, übermittelt der Teilnetz-Zugangsserver 103 die Berechtigungsinformation der Teilnehmervorrichtung 100, zum Teilnetzwerk 107 an den Berechtigungsserver 105, siehe SA7, und bestätigt der Teilnehmervorrichtung 100 eine erfolgreiche Registrierung, siehe SA9 und SA10.

Bei einer nachfolgenden Zugangsanfrage der Teilnehmervorrichtung 100 an die Zugangsvorrichtung 104, siehe SA11, teilt die Teilnehmervorrichtung 100 die Teilnetzwerk-Kennung und/oder den ihr zugewiesenen Teilnetzwerk-Autorisierungs-Token der Zugangsvorrichtung 104 mit. Diese Informationen werden an den Berechtigungsserver 105 weitergeleitet (SA12). Bei der Überprüfung der Teilnehmerprofildaten im Berechtigungsserver 105, werden Berechtigungsinformationen, beispielsweise in Form einer Zuordnung der Teilnetzwerks-Kennung zum Teilnetzwerk-Authentisierungs-Token und/oder zur Teilnehmerkennung, überprüft. Abschließend wird eine vom Überprüfungsergebnis abhängige Antwortnachricht an die Teilnehmervorrichtung 100 übermittelt, siehe SA13, SA14. Die Teilnehmervorrichtung 100 ist somit zum Zugriff auf das Teilnetzwerk 107 berechtigt.

In einer Ausführungsform kann eine Anmeldung der Teilnehmervorrichtung 100 beim Teilnetz-Zugangsserver 103 und die nachfolgende Aktualisierung des Berechtigungsservers 105 kann lediglich vor dem ersten Zugriff auf das Teilnetzwerk 107 durchgeführt werden. In einer anderen Ausführungsform kann diese Registrierung aber auch beim ersten Zugangsversuch oder bei jeder Zugangsanfrage der Teilnehmervorrichtung 100 beim Teilnetzwerk 107 durchgeführt werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur Einrichtung einer Zugangsberechtigung für eine Teilnehmervorrichtung (100) zu einem Teilnetzwerk (107) eines Mobilfunknetzes (106), wobei das Teilnetzwerk (107) mittels einer Mobilfunk-Administrationsvorrichtung (102) administriert wird und die Zugangsberechtigung der Teilnehmervorrichtung (100) zum Teilnetzwerk (107) mittels einer Zugangsvorrichtung (104) des Mobilfunknetzes überprüft wird, wobei
- eine Zugriffsberechtigung zum Teilnetzwerk (107) von einer lokalen Administrationsvorrichtung (101) bei der Mobilfunk-Administrationsvorrichtung (102) für die Teilnehmervorrichtung (100) angefordert wird (100),
- ein Teilnetzwerk-Autorisierungs-Token von der Mobilfunk-Administrationsvorrichtung (102) der Teilnehmervorrichtung (100) zugewiesen wird (2) und an die Teilnehmervorrichtung (100) übermittelt wird (3),
wobei die Teilnehmervorrichtung (100) lediglich dann zum Zugriff auf das Teilnetzwerk (107) autorisiert wird, wenn der Teilnetzwerk-Autorisierungs-Token bei einer Zugangsanfrage von der Teilnehmervorrichtung (100) zum Teilnetzwerk (107) übermittelt (4) und als gültig bestätigt wird (5).

2. Verfahren nach Anspruch 1, wobei die Teilnehmervorrichtung (100) zum Zugriff auf das Teilnetzwerk (107) nur dann autorisiert wird, wenn die Teilnehmervorrichtung (100) zusätzlich von der Zugangsvorrichtung (104) zum Zugriff auf das Mobilfunknetz (106) autorisiert wird.

3. Verfahren nach einem der vorherigen Ansprüche, wobei beim Einrichten eines Teilnetzwerks (107) ein Teilnetz-Zugangsserver (103) eingerichtet wird, und der Teilnetzwerk-Autorisierungs-Token im Teilnetz-Zugangsserver (103) einem Teilnetzwerk (107), insbesondere einer Teilnetzwerkskennung des Teilnetzwerks (107), zugeordnet wird.

4. Verfahren nach Anspruch 3, wobei der Zugang der Teilnehmervorrichtung (100) auf das Teilnetzwerk (107) lediglich dann autorisiert wird, wenn die Zuordnung des Teilnetzwerk-Autorisierungs-Token zum Teilnetzwerk (107) bestätigt wird.

5. Verfahren nach Anspruch 4, wobei die Zuordnung durch eine Abfrage des Teilnetz-Zugangsserver (103) ermittelt wird.

6. Verfahren nach Anspruch 4, wobei eine Information zur Zuordnung des Teilnetzwerk-Autorisierungs-Token zum Teilnetzwerk (107) vom Teilnetz-Zugangsserver (103) an einen Berechtigungsserver (105) des Mobilfunknetzes übermittelt wird und die Zuordnung durch eine Abfrage des Berechtigungsservers (105) ermittelt wird.

7. Verfahren nach einem der vorherigen Ansprüche, wobei der Teilnetzwerk-Autorisierungs-Token über eine Datenkommunikationsverbindung oder über eine Nahfeld-Kommunikationsverbindung oder durch Einscannen eines optischen Codes oder über eine manuelle Eingabeeinheit von der Teilnehmervorrichtung (100) empfangen wird.

8. Verfahren nach einem der vorhergehenden Ansprüche, wobei der Teilnetzwerk-Autorisierungs-Token mindestens einen Parameter enthält, der erfüllt sein muss um eine Zugangsberechtigung zum Teilnetzwerk (107) zu erhalten.

9. Verfahren nach einem der vorherigen Ansprüche, wobei der Teilnetzwerk-Autorisierungs-Token auf einem internen Speicher der Teilnehmervorrichtung (100) abgespeichert wird.

10. Verfahren nach einem der vorherigen Ansprüche, wobei der Teilnetzwerk-Autorisierungs-Token auf einem Sicherheitsmodul (108) abgespeichert wird, wobei das Sicherheitsmodul (108) lösbar mit der Teilnehmervorrichtung (100) verbunden ist und in dem Sicherheitsfunktionen des Mobilfunknetzes abgespeichert sind, insbesondere einen Teilnehmeridentifizierungsmodul des Mobilfunknetzes.

11. Verfahren nach einem der vorherigen Ansprüche, wobei das Teilnetzwerk (107) ein Steuerungsnetzwerk einer Industrieanlage ist, und insbesondere zur Übertragung von Steuerungskommunikation zu einem Steuerungsserver außerhalb des Teilnetzwerks (107) verwendet wird.

12. Verfahren nach einem der vorhergehenden Ansprüche, wobei das Mobilfunknetz gemäß einem Mobilfunkstandard der fünften Generation (5G) des Dritter Generation Partnerschaftsprojekts (3GPP) ausgebildet ist.

13. Verfahren nach einem der vorhergehenden Ansprüche, wobei das Mobilfunknetz und insbesondere die Mobilfunk-Administrationsvorrichtung, von einem Mobilfunknetzbetreiber administriert wird, und das Teilnetzwerk und insbesondere die lokale Administrationsvorrichtung von einem Teilnetzwerkbetreiber administriert wird, und wobei der Mobilfunknetzbetreiber unterschiedlich zum Teilnetzwerkbetreiber ist.

14. Assistenzsystem zur Einrichtung einer Zugangsberechtigung für eine Teilnehmervorrichtung (100) zu einem Teilnetzwerk (107) eines Mobilfunknetzes (106), wobei das Teilnetzwerk (107) mittels einer Mobilfunk-Administrationsvorrichtung (102) administriert wird und die Zugangsberechtigung der Teilnehmervorrichtung (100) zum Teilnetzwerk (107) mittels einer Zugangsvorrichtung (104) des Mobilfunknetzes überprüft wird, umfassend
- eine lokalen Administrationsvorrichtung, die derart ausgebildet ist, eine Zugriffsberechtigung zum Teilnetzwerk (107) für die Teilnehmervorrichtung (100) bei einer Mobilfunk-Administrationsvorrichtung (102) anzufordern, und
- die Mobilfunk-Administrationsvorrichtung (102) derart ausgebildet ist, einen Teilnetzwerk-Autorisierungs-Token der Teilnehmervorrichtung (100) zuzuweisen und an die Teilnehmervorrichtung zu übermitteln,
wobei die Teilnehmervorrichtung (100) lediglich dann zum Zugriff auf das Teilnetzwerk (107) autorisiert wird, wenn der Teilnetzwerk-Autorisierungs-Token bei einer Zugangsanfrage von der Teilnehmervorrichtung (100) zum Teilnetzwerk (107) übermittelt und als gültig bestätigt wird.

15. Assistenzsystem (110) nach Anspruch 14, des Weiteren umfassend einen Teilnetz-Zugangsserver (103), der beim Einrichten eines Teilnetzwerks (107) eingerichtet wird, und derart ausgebildet ist den Teilnetzwerk-Autorisierungs-Token einem Teilnetzwerk (107), insbesondere einer Teilnetzwerkskennung des Teilnetzwerks (107), zuzuordnen und das Verfahren gemäß den Ansprüchen 1 bis 13 durchzuführen.

16. Teilnehmervorrichtung, der derart ausgebildet ist das Verfahren gemäß den Ansprüchen 1 bis 13 durchzuführen.

17. Computerprogrammprodukt, das direkt in einen Speicher mindestens eines digitalen Computers ladbar ist, umfassend Programmcodeteile, die dazu geeignet sind, die Schritte des Verfahrens nach einem der Ansprüche 1 bis 13 durchzuführen.
